Europäisches Patentamt

European Patent Office

Office européen des brevets

(19)

(11) Veröffentlichungsnummer : **0 417 567 B1**

(12) ## EUROPÄISCHE PATENTSCHRIFT

(45) Veröffentlichungstag der Patentschrift :
**05.05.93 Patentblatt 93/18**

(51) Int. Cl.$^5$ : **C09C 1/24**

(21) Anmeldenummer : **90116727.0**

(22) Anmeldetag : **31.08.90**

(54) **Verfahren zur Herstellung von plättchenförmigen Hematitpigmenten.**

(30) Priorität : **13.09.89 DE 3930601**

(43) Veröffentlichungstag der Anmeldung :
**20.03.91 Patentblatt 91/12**

(45) Bekanntmachung des Hinweises auf die
Patenterteilung :
**05.05.93 Patentblatt 93/18**

(84) Benannte Vertragsstaaten :
**DE FR GB NL**

(56) Entgegenhaltungen :
**EP-A- 0 068 311**
**EP-A- 0 293 746**
**US-A- 4 373 963**
**US-A- 4 376 656**
**WORLD PATENT INDEX LATEST, Derwent Publications Ltd., LONDON, GB, Week 8220**

(73) Patentinhaber : **BASF Aktiengesellschaft**
**Carl-Bosch-Strasse 38**
**W-6700 Ludwigshafen (DE)**

(72) Erfinder : **Ostertag, Werner, Dr.**
**Oberer Bergelweg 2**
**W-6718 Grünstadt (DE)**
Erfinder : **Schwidetzky, Christoph, Dr.**
**Im Tiefenthal 2**
**W-6733 Hassloch (DE)**
Erfinder : **Mronga, Norbert, Dr.**
**Ringstrasse 2**
**W-6915 Dossenheim (DE)**

EP 0 417 567 B1

## Beschreibung

Die vorliegende Erfindung betrifft ein Verfahren zur Herstellung von plättchenförmigen Hematitpigmenten mit erhöhtem Glanz, größerer Partikelgröße, verbesserter Dispergierbarkeit und gezielt einstellbaren Farbtonnuancen mittels eines zweistufigen hydrothermalen Verfahrens.

Synthetische plättchenförmige Eisenoxid-Pigmente haben in jüngster Zeit als Effektpigmente zur Einfärbung von Lacken, Kunststoffen, keramischen Materialien, im Druck und in der dekorativen Kosmetik Interesse gefunden. Entscheidend für die optische Wirkung der Pigmente sind Partikelgröße und die den Glanz bestimmenden glatten Oberflächen der Eisenoxidteilchen.

Im Gegensatz zu den Farbpigmenten, deren optische Wirkung auf Absorption und Streuung beruht, basiert die optische Wirkung der Effekt- oder Glanzpigmente vornehmlich auf gerichteter Reflexion an plättchenförmig ausgebildeten orientierten Pigmentpartikeln.

Effektpigmente mit Partikeldurchmessern zwischen 5 und 12 $\mu$ zeigen einen seidig weichen Glanz, während Effektpigmente mit einem Partikeldurchmesser über 12 $\mu$ in charakteristischer Weise glitzern. Der bei Effektpigmenten angestrebte mittlere Partikeldurchmesser liegt je nach Anwendungsgebiet zwischen 5 und 20 $\mu$. Unter Plättchendurchmesser wird die Größe in der größten Abmessung der Plättchen verstanden.

Die bisherigen Entwicklungen synthetischer plättchenförmiger Eisenoxid-Pigmente sind gekennzeichnet vom Bestreben, Pigmente mit einem höheren mittleren Plättchendurchmesser und mit verbessertem Glanz herzustellen. Obwohl die Farbe bei Effektpigmenten eine untergeordnete Rolle spielt, ist es auch wünschenswert, den Farbton der Eisenoxidpigmente zu nuancieren. Aufgehellte Pigmente sind aufgrund ihrer vielfältigen Überfärbemöglichkeiten besonders interessant.

In den älteren Schutzrechten FR-PS-638 200, DE-PS-541 768 und 658 020, GB-OS-20 28 784, DE-OS-30 19 404 und DE-OS-20 56 042 wird die Herstellung von plättchenförmigen $\alpha$-Fe$_2$O$_3$-Pigmenten durch Hy-drothermalbehandlung von Eisenhydroxid bzw. Eisenoxidhydrat in alkalisch wäßrigem Medium beschrieben. Hierbei resultieren Produkte, die nicht den Anforderungen an ein Farbpigment genügen und bestenfalls aufgrund ihrer Barrierewirkung für den Korrosionsschutz Verwendung finden können. In der Praxis haben diese Produkte als Farbpigmente nie eine Rolle gespielt.

In der EP-PS-00 14 382 werden plättchenförmige Eisenoxid-Pigmente, die in fester Lösung mindestens eines der Oxide der IV., V. und/oder VI. Haupt- und Nebengruppe und/oder der II. Nebengruppe der Periodensystems der Elemente enthalten, beschrieben. Diese Pigmente werden durch hydrothermale Behandlung in Gegenwart der Verbindungen der jeweiligen Elemente erhalten, wobei Plättchen mit höherem Durchmesser zu Dickenverhältnis und verbessertem Glanz entstehen. Allerdings sind die Produkte, wenn überhaupt, nur mit großem Aufwand, z.B. übermäßig langer Verweilzeit im Reaktor bei der Hydrothermalsynthese, mit einem mittleren Partikeldurchmesser um 10 $\mu$m und darüber herzustellen.

In der EP-OS-0 180 881 wird ein Verfahren zur Herstellung von plättchenförmigen dotierten $\alpha$-Fe$_2$O$_3$-Pig-menten mit einem mittleren Partikeldurchmesser von bis zu 20 $\mu$ und einem mittleren Durchmesser- zu Dickenverhältnis von 20 bis 100 beschrieben, dessen besonderes Merkmal der Zusatz von aktiven besonders her-gestellten $\alpha$-Eisenoxidkeimen plättchenförmiger Gestalt zur Eisen(III)-hydroxidhaltigen Ausgangssuspension vor der hydrothermalen Behandlung ist. Nachteilig bei diesem Verfahren ist der besondere, der Hydrothermalreaktion vorgeschaltete Verfahrensschritt der Herstellung dieser aktiven $\alpha$-Eisenoxidkeime, der technisch anspruchsvoll ist, das Gesamtverfahren kompliziert und zu agglomerathaltigem Produkt führt.

In der JA-OS-80 016 978 werden plättchenförmige $\alpha$-Eisenoxide, die ihrerseits aus einer hydrothermalen Reaktion stammen, als Keime für die Herstellung plättchenförmiger Pigmente mit einheitlicher Korngrößenverteilung eingesetzt. Diese Arbeitsweise führt jedoch, wie das obengenannte Verfahren, zur Bildung zahlloser unerwünschter Agglomerate, so daß derartig hergestellte Pigmente für anspruchsvolle Anwendungen nicht in Frage kommen.

In der EP-PS-0 068 311 und der US-PS-4 373 963 werden hochglänzende plättchenförmige Pigmente der Zusammensetzung Al$_x$Fe$_{2-x}$O$_3$ für x = 0,02 - 0,5 beschrieben. Sie lassen sich auch in Reaktionszeiten < 1 h mit einem größeren mittleren Partikeldurchmesser herstellen. Die Pigmente werden in einer hydrothermalen Reaktion aus einer wäßrigen Suspension von Eisen(III)-hydroxid, bzw. -oxidhydrat, Natriumaluminat und Natronlauge gewonnen. Diese Pigmente zeichnen sich gegenüber den bis dahin beschriebenen plättchenförmigen Hematitpigmenten durch ihren aufgehellten, Überfärbungen ermöglichenden, Farbton und durch vergleichweise hohe Durchmesser- zu Dickenverhältnisse der Einzelpartikel aus. In technisch realistischen und wirtschaftlichen vertretbaren Synthesezeiten von weniger als 1 h, wie sie beispielsweise bei einem Rohrreaktor infrage kommen, war es möglich, Pigmente mit einem mittleren Durchmesser bis zu 12 $\mu$ zu synthetisie-ren. Bei den oben aufgeführten Verfahren, bei denen plättchenförmige Hematitpigmente entstehen, die neben Eisen auch Fremdionen enthalten, hängt die Einbaurate und damit die Teilchengröße der hergestellten Pigmente stark von den sich gegenseitig beeinflussenden Reaktionsparametern ab, wobei mit zunehmender Grö-

2

ße der herzustellenden Pigmentteilchen insbesondere zunehmende Alkaligehalte und Verweilzeiten bei der hydrothermalen Synthese in Kauf genommen werden müssen, was aber aus produktionstechnischer Sicht, z.B. wegen der damit verbundenen erhöhten Korrosion, problematisch ist, wenn man nicht auf korrosionsfestere und teurere Werkstoffe für die Druckapparaturen ausweichen will.

In der EP-OS-0 265 820 werden plättchenförmige Pigmente der Zusammensetzung $Mn_xAl_yFe_{2-(x+y)}O_3$ in denen x einen Wert von 0,01 bis 0,06 und y einen Wert von 0 bis 0,2 hat beschrieben, bei denen in kurzen Synthesezeiten größere Plättchendurchmesser erreicht werden können. Die Pigmente werden durch hydrothermale Behandlung von wäßrigen Suspensionen, die Eisenhydroxid bzw. Oxidhydrat sowie Alkali und eine lösliche Manganverbindung und gegebenenfalls Natriumaluminat enthalten, hergestellt. Durch den Zusatz von Manganat oder Permanganat ist es überraschenderweise möglich, den Durchmesser der Pigmentpartikel gezielt zwischen 8 und 50 μm einzustellen, ohne daß Normalitäten an Alkalihydroxid von über 2N eingehalten werden müssen. Die Plättchen lassen sich auch mit einem sehr hohen Durchmesser- zu Dickenverhältnis von etwa 100 herstellen. Die Farbe der Pigmente ist allerdings relativ dunkel und braun, was Überfärbungsmöglichkeiten bei der Anwendung einengt.

Zusammenfassend läßt sich sagen, daß bei den bisher bekannt gewordenen synthetisch hergestellten Hematitpigmenten Bestrebungen vorherrschten, den mittleren Durchmesser der Plättchen und den Glanz zu erhöhen, und daß dieses Ziel durch Veränderung der Reaktionsparameter nur bedingt unter Inkaufnahme anderer Nachteile erzielt werden konnte.

Der vorliegenden Erfindung lag daher die Aufgabe zugrunde, ein Verfahren zur Herstellung von plättchenförmigen Eisenoxiden durch hydrothermale Behandlung von Eisen(III) Hydroxid bzw. -oxidhydraten enthaltenden wäßrigen Suspensionen in Gegenwart von Alkalihydoxiden sowie in Gegenwart von Aluminium- und/oder Siliciumverbindungen bereitzustellen, bei dem man bei vergleichsweise niedrigen Normalitäten an Alkalihydoxiden gezielt eine Vergrößerung der Partikeldurchmesser und damit eine Erhöhung ihres Glanzes erreicht.

Es wurde gefunden, daß man diese Aufgabe dadurch lösen kann, daß man die hydrothermale Behandlung in zwei Stufen durchführt, mit der Maßgabe, daß man in der ersten Stufe eine Normalität der Alkalilauge von 0,2 bis 2N einhält und in der zweiten Stufe die Normalität um 0,2 bis 2,5 erhöht.

Als Einsatzstoffe für die Herstellung der Pigmente kommen die Hydroxide von Eisen wie auch dessen Oxidhydrate in Frage. Eisenoxidhydrat ist sogar dem Eisenhydroxid vorzuziehen, da das pigmentartige FeOOH wesentlich definierter vorliegt und sich in der technischen Handhabung wesentlich günstiger verhält als das gelartige $Fe(OH)_3$. Als Eisenoxidhydrateinsatzstoff haben sich alle bekannten kristallographischen Modifikationen, z.B. α-FeOOH, β-FeOOH, γ-FeOOH, bewährt.

Was den Al-haltigen Einsatzstoff betrifft, so lassen sich außer Alkalialuminat Aluminiumhydroxid und die bekannten Aluminiumoxidhydrate Böhmit und Bayerit und lösliche Aluminiumsalze einsetzen. Auch Aluminiumoxid kann eingesetzt werden, da es, wie aus dem Bayer-Aufschluß bekannt, bei hydrothermalen Bedingungen in Gegenwart von Alkali in Aluminat übergeführt wird.

Als Einsatzstoffe für Silicium kommen z.B. Siliciumdioxid oder Alkalisilikat oder auch Verbindungen des Siliciums, die in dem alkalischen Reaktionsmedium hydrolysiert werden, z.B. Ester der Kieselsäure, in Betracht.

Die der hydrothermalen Behandung in der ersten Stufe zu unterziehenden Suspensionen enthalten Alkalihydroxide, vorzugsweise NaOH und/oder KOH, in einer Konzentration von 0,2 bis 2N. Setzt man anstelle von Alkalialuminat Aluminiumverbindungen ein, die durch das Alkali in Aluminat unter den Reaktionsbedingungen übergeführt werden, so ist die hierfür benötigte Alkalimenge zusätzlich in Betracht zu ziehen. Das gleiche gilt auch beim Einsatz von Siliciumverbindungen, die in dem alkalischen Reaktionsmedium hydrolysiert werden.

Ein weiterer wichtiger Verfahrensparameter bei der Herstellung der Pigmente ist die Temperatur, da es für jede Suspension von Ausgangsstoffen bestimmter Zusammensetzung bei vorgegebener Zeit eine Minimaltemperatur gibt, unterhalb der die Hydroxide bzw. Oxidhydrate nicht mehr zu Oxiden entwässern. Diese Minimalreaktionstemperatur wird für die jeweiligen Gegebenheiten am besten experimentell ermittelt. Sie liegt, wie eine ganze Reihe von Versuchen zeigte, stets über 170°C. Zweckmäßigerweise wählt man die Reaktionstemperatur im Bereich zwischen 250 bis 360°C, da dieser Temperaturbereich gewährleistet, daß die Reaktion mit einer technisch sinnvollen Geschwindigkeit, d.h. in weniger als z.B. 1 h abläuft.

Wird die Verweilzeit der zur Reaktion gebrachten Suspension erhöht, so läßt sich die Reaktionstemperatur absenken. So kann am Beispiel einer bestimmten Suspension von Ausgangsmaterialien gezeigt werden, daß Reaktionstemperaturen von 310 bzw. 300, 285, 275, 270 und 260°C Verweilzeiten von 1, 10, 120, 600, 1200 und 2400 min entsprechen.

Außer Temperatur und Verweilzeit spielt auch die Feststoffkonzentration (Konzentration an Eisenverbindungen) der Suspension der Ausgangsmaterialien noch eine, wenn auch untergeordnetere Rolle. Im allgemeinen wird die Konzentration der eingesetzten Stoffe so gewählt, daß die Suspension einen Feststoffanteil von 1 bis 20, zweckmäßigerweise zwischen 1 und 10 Gew.-%, aufweist. Im Bereich zwischen 1 und 10 Gew.-%

EP 0 417 567 B1

liegen die Fließeigenschaften der Suspension der Einsatzstoffe so, daß die Suspension sich ohne Schwierigkeiten technisch handhaben läßt.

Nach Beendigung der Reaktion, d.h. nach Umwandlung des eingesetzten eisenhaltigen Einsatzstoffes in plättchenförmiges Eisenoxid-Pigment (Hematit) schließt sich die 2. Stufe an. Hierbei wird dergestalt vorgegangen, daß man die Suspension mit weiterer Alkalilauge versetzt, so daß sich die Normalität der Suspension an Alkalilauge um 0,2 bis 2,5 N erhöht. Man kann aber auch so vorgehen, daß man die gebildeten plättchenförmigen Hematit-Pigmente von der Flüssigkeit abtrennt und, zweckmäßig vor der Trocknung, mit Alkalilauge einer Normalität versetzt, die um 0,2 bis 2,5 N über der Normalität der ursprünglichen Suspension liegt.

Produktionstechnisch besonders vorteilhaft ist aber die Erhöhung der Alkalikonzentration der Plättchenpigmente enthaltenden Suspension unmittelbar nach der Bildung des Pigments, beispielsweise durch Zupumpen konzentrierter Alkalilauge, insbesondere NaOH oder KOH, in den Reaktionsautoklaven.

In der zweiten Stufe können auch tiefere Temperaturen als in der ersten Stufe eingehalten werden. Das Plättchenwachstum und die Ausbildung glatter Oberflächen erfolgen um so schneller, je höher die Temperatur der Hydrothermalbehandlung in der zweiten Stufe ist. Zweckmäßig arbeitet man bei Temperaturen von 150 bis 360°C.

Die Konzentration des Hematitpigmentes in der alkalischen Lösung der zweiten Stufe kann beliebig gewählt werden und ist nur durch die Rührbarkeit bzw. Pumpbarkeit der Suspension nach oben begrenzt. Wie in der ersten Stufe arbeitet man zweckmäßig bei Feststoffkonzentrationen von 1 bis 20, vorteilhaft 1 bis 10 Gew.-% . Nach dem Abschluß der Behandlung in der zweiten Stufe wird abgekühlt. Die Pigmente werden durch Filtrieren von der Lösung abgetrennt, gewaschen und getrocknet.

Die Zeitdauer der Behandlung in der zweiten Stufe liegt aus wirtschaftlichen Gründen zweckmäßigerweise unter 1 h. Längere Behandlungen sind möglich. Auch ist man keineswegs auf solche Hematitpigmente, die in weniger als 1 h Reaktionszeit in der ersten Stufe synthetisiert wurden, beschränkt. Versuche zeigen eine uneingeschränkte Wirksamkeit der zweiten Stufe auch bei Hematitpigmenten, die in der ersten Stufe über mehrere Stunden synthetisiert wurden.

Die Veränderung der mittleren Partikeldurchmesser infolge der Behandlung in der zweiten Stufe läßt sich Cilas-granulometrisch verfolgen.

Die Veränderung des Glanzes kann über ein Farbmeßgerät durch Messung der Helligkeit L* bei zwei verschiedenen Meßwinkeln bestimmt werden. Als Meßzahl für den Glanz dient der Wert

$$\frac{L*25° - L*45°}{L*25°} \cdot 100$$

L*25° und L*45° sind die bei den Winkeln 25° und 45° gemessenen L*-Werte. Je höher der Glanzwert, desto besser ist der Glanz des plättchenförmigen Pigmentes.

Partikelwachstum und Zunahme des Glanzes lassen sich auch über rasterelektronenmikroskopische Untersuchungen verfolgen. Rasterelektronenmikroskopische Aufnahmen geben i.a. einen guten Aufschluß über die Größe von Pigmentpartikeln und über die Qualität der Oberfläche der oxidischen Plättchen. Die vorgenannten Methoden sind jedoch besser geeignet, die in der zweiten Stufe erzielten Effekte zu quantifizieren.

Untersuchungen an den nach der zweiten Stufe erhaltenen Hematitpigmenten zeigen einen deutlichen Effekt auf Partikeldurchmesser und Partikeloberfläche. Die eingesetzten Pigmentpartikel sind danach größer, und die Oberflächen der Partikel sind glatter und gleichmäßiger. Streuende, die Optik der Effektpigmente störende kleine Teilchen oder Unregelmäßigkeiten an der Oberfläche der Partikel verschwinden. Dies ist insofern überraschend, als eine entsprechend längere Hydrothermalbehandlung unmittelbar im Anschluß an die Synthese der plättchenförmigen Hematitpigmente ohne Veränderung der Alkalität der Suspension nur einen minimalen Effekt auf Partikelgröße und Glanz hat, wie Vergleichsversuche zeigen.

Das erfindungsgemäße Verfahren ist überraschend, da durch Synthese bei erhöhter Alkalikonzentration in nur einer Stufe der gleiche Effekt, wie er bei dem erfindungsgemäßen zweistufigen Verfahren zustande kommt, nicht zu erzielen ist. Hematitplättchen, die bei hoher Alkalikonzentration synthetisiert werden, sind dicker, besitzen weniger Deckvermögen und sie verleihen als Bestandteil einer Lackschicht dieser einen geringeren Glanz als die erfindungsgemäß hergestellten Pigmente; sie sind auch farblich und in der erzielten Zusammensetzung andersartig.

Plättchenförmige Aluminium und/oder Silicium enthaltende Pigmente werden bei der hydrothermalen Behandlung der zweiten Stufe mit einer reinen Alkalilauge Al- und/oder Si-ärmer. Dies ist ein nicht notwendigerweie unerwünschter Effekt. Will man jedoch die Abreicherung der Pigmente an $Al_2O_3$ bzw. $SiO_2$ verhindern, so kann dies leicht dadurch geschehen, daß man der Alkalilauge Aluminium- und/oder Siliciumverbindungen zusetzt.

Die Möglichkeit durch Zusätze bei der zweiten Stufe, zumindest an der Oberfläche der Pigmente, noch in die Festkörperzusammensetzung einzugreifen, und diese zu modifizieren, stellt einen weiteren wichtigen Vorteil der erfindungsgemäßen Arbeitsweise dar. Die Zusätze können zu jedem beliebigen Zeitpunkt der zweiten

4

Stufe zugegeben werden. Sie sollten in Alkali löslich sein.

So wurde gefunden, daß man durch Zusätze von $SiO_2$, $ZrO_2$, $B_2O_3$, $P_2O_5$ oder weiterem $Al_2O_3$ Agglomerationen der Pigmente weitgehend vermeiden und die Dispergierbarkeit der plättchenförmigen Hematitpigmente bei der Anwendung in Lack, Kunststoff oder anderen Bindemitteln verbessern kann. Außer den Oxiden können auch andere Verbindungen der entsprechenden Elemente eingesetzt werden, sofern sie in Alkalilaugen löslich sind.

Weiterhin wurde gefunden, daß man mit Zusätzen wie $Na_2CrO_4$, $Na_2MoO_4$, $KMnO_4$, $Na_2WO_4$ oder von Gemischen dieser Zusätze während der zweiten Stufe auch den Farbton der Hematit-Pigmente beeinflussen kann. Wie die Analyse zeigt, werden in solchen Fällen an der Oberfläche der Hematitplättchen die Elemente Cr, Mo, Mn, Ti oder W eingebaut, was die Möglichkeit einer gezielten Farbtonnuancierung eröffnet.

Bei der Behandlung der zweiten Stufe nimmt $SiO_2$ bzw. Wasserglas insofern eine Sonderstellung ein, als die Gegenwart von $SiO_2$ auch zum Eindiffundieren von $SiO_2$ in den Hematitkörper führt. Es belegt nicht nur die Oberfläche. Obwohl nur mäßig glanzverbessernd, ist der Zusatz von Wasserglas aufgrund seiner aggregations- bzw. agglomerationsverhindernden Wirkung auf das Pigment interessant.

Die hier beschriebenen Oberflächenmodifikationen schließen eine zusätzliche Belegung mit organischen Hilfsmitteln nicht aus. Vielfach wird das Aufbringen von Hilfsmitteln wie Carbonsäuren, Phosphorsäuren oder Silanen durch die erfindungsgemäße Oberflächenmodifikation sogar noch erleichtert.

Mit dem erfindungsgemäßen zweistufigen Verfahren gelingt es, plättchenförmige Hematit-Pigmente mit erhöhtem Glanz, größerem Partikeldurchmesser, verbesserter Dispergierbarkeit und gezielt einstellbaren Farbtonnuancen herzustellen.

Weitere Einzelheiten gehen aus den Beispielen hervor.

Die in den Beispielen angegebenen "Cilas-Werte" wurden mit einem handelsüblichen Cilas-Granulometer 715 als Volumenverteilung ermittelt.

Die Glanzmessungen erfolgten mit einem "Data Color" Goniophotometer mit Zeiss-Meßkopf GK 111. Die aufgeführte "Glanzbewertungszahl" wurde, wie bereits beschrieben, aus dem bei zwei Winkeln gemessenen Helligkeitswert L∗ entsprechend der Beziehung

$$\frac{L*25° - L*45°}{L*25°} \cdot 100$$

ermittelt. Die Meßwinkel 25° und 45° beschreiben den Winkel zwischen dem Glanzwinkel (reflektiertem Strahl) und dem Sehstrahl des Beobachters.

Alle Messungen wurden an luftgetrocknenden mit 10 Gew.-% Pigment pigmentierten base-coat-Abrakelungen, die unter Verwendung eines 200 μ Rakels hergestellt wurden, durchgeführt.

Bei den in den Bespielen genannten Prozentangaben handelt es sich, falls nicht anders vermerkt, um Gewichtsprozente.

Beispiel 1

a) Stufe 1

In einem als Vorlage dienenden Rührbehälter wird eine wäßrige Suspension angesetzt, die 58 g/l FeOOH (spezifische Oberfläche, BET 45 m²/g), 38,0 g/l NaOH und 32,6 g/l γ-$Al_2O_3$ enthält. Die Normalität der Suspension an Natronlauge beträgt 0,95.

Die homogene Suspension wird mit einem Durchsatz von 37 kg/h durch einen Rohrreaktor von 45 m Länge und einem Innendurchmesser von 30 mm gepumpt. Der Rohrreaktor ist über eine Länge von 35 m Öl-beheizt (330°C), über die letzten 10 m wassergekühlt. Die aus dem Rohrreaktor ausgetragene Suspension wird filtriert, zunächst mit 80°C warmer 1 N NaOH, danach mit Wasser gewaschen.

Das Festprodukt weist die Zusammensetzung $Al_{0,2}Fe_{1,8}O_3$ auf und zeigt einen mittleren Partikeldurchmesser von 3,8 μ. Bei den Meßwinkeln 25° und 45° werden die L∗-Werte von 59,8 und 47,7 gemessen, woraus sich eine Glanzzahl von 20,2 errechnet.

b) Stufe 2

10 g (bezogen auf Trockensubstanz) des abfiltrierten, gewaschenen noch nicht getrockneten plättchenförmigen Hematitpigments der Stufe 1 werden mit 140 g 1,5 N wäßriger Natronlauge versetzt und im 300-ml-Rührautoklaven innerhalb von 15 min. auf 330°C aufgeheizt. Dann wird 30 min. lang bei dieser Temperatur gerührt. Anschließend wird innerhalb von 13 min. auf 100°C abgekühlt, das Pigment durch Filtration abgetrennt, mit $H_2O$ gewaschen und bei 120°C getrocknet.

Das in der zweiten Stufe erhaltene Pigment zeigt gegenüber dem in der ersten Stufe erhaltenen Pigment im Rasterelektronenmikroskop viel glattere Oberflächen. Es weist einen mittleren Partikeldurchmesser von 5,4 $\mu$ auf. Die L*-Werte bei Meßwinkeln von 25° und 45° betragen 60,5 bzw. 37,2, woraus sich eine Glanzzahl von 38,5 errechnet. Die gemessenen Farbwerte $C_{ab}$ und H° betragen 21,7 und 32,7 bei einem Meßwinkel von 45°.

c) Vergleichsbeispiel

Die bei der Herstellung des Ausgangspigmentes gemäß Stufe 1 aus dem Rohrreaktor ausgetragene Suspension wird in einer Menge von 150 ml in einem 300-ml-Rührautoklaven eingefüllt und innerhalb von 15 min auf 330°C aufgeheizt. Dann wird 30 min lang bei dieser Temperatur gerührt. Anschließend wird innerhalb von 13 min auf unter 100°C abgekühlt, das Pigment durch Filtration abgetrennt, gewaschen und bei 120°C getrocknet.

Das erhaltene Produkt weist eine mittlere Partikelgröße von 4,0 $\mu$ auf. Die ermittelte Glanzzahl beträgt 25.

Beispiel 2

a) Stufe 1

In einem gerührten Vorlagebehälter werden 1 cbm Wasser, 59 kg $\alpha$-FeOOH (spezifische Oberfläche nach BET 41 m²/g), 40 kg NaOH und 31,1 kg $\gamma$-Al$_2$O$_3$ eingebracht, entsprechend einer 1N Laugenkonzentration in der Suspension.

Die Suspension wird dann mit einem konstanten Durchsatz von 42 kg/h durch einen Rohrreaktor mit einem Innendurchmesser von 30 mm und 45 m Länge gepumpt. Der Rohrreaktor ist über die ersten 35 m Öl-beheizt (330°C), die restlichen 10 m sind wassergekühlt.

Die ausgetragene Suspension wird filtriert, und wie in Beispiel 1, Stufe 1 beschrieben gewaschen.

Die entstandene Festprodukt besteht, wie rasterelektronenmikroskopische Aufnahmen zeigen, aus dünnen Plättchen. Cilas-granulometrische Messungen ergeben einen mittleren Partikeldurchmesser von 10,8 $\mu$. Bei den Meßwinkeln 25° und 45° werden die L∗-Werte 66,8 und 40,78 gemessen, woraus sich eine Glanzzahl von 39,0 errechnet. Das Produkt zeigt im Röntgenbild Hematitlinien. Seine Analysenwerte waren 3,0 % Al und 65,8 % Fe.

b) Stufe 2

10 g (bezogen auf Trockensubstanz) des abfiltrierten, gewaschen und nicht getrockneten Pigmentes der Stufe 1 werden mit 100 ml 1,5N NaOH in einen 300-ml-Rührautoklaven gegeben und innerhalb von 15 min. auf 310°C erhitzt. Anschließend wird bei dieser Temperatur 30 min. gerührt und dann innerhalb von 12 min. auf unter 100°C abgekühlt. Das Festkörperprodukt wird von der Lösung abgetrennt, mit H$_2$O gewaschen und bei 115°C getrocknet.

Die Pigmentpartikel zeigen im Rasterelektronenmikroskop glatte ebene Oberflächen und weisen eine mittlere Partikeldurchmesser von 14,9 $\mu$ auf. Bei den Messwinkeln von 25° und 45° werden L∗-Werte von 70.8 und 34.3 gemessen, woraus sich eine Glanzzahl von 52 errechnet.

Beispiel 3 bis 13

Das in Stufe 1 des Beispiels 1 erhaltene Pigment wird in analoger Weise wie in Beispiel 2 beschrieben in der zweiten Stufe mit Natronlauge behandelt, wobei die Konzentration der wäßrigen Natronlauge, die Temperatur und die Verweildauer bei der gewählten Temperatur wie in der folgenden Tabelle veranschaulicht, variiert wurden. Die dabei resultierenden mittleren Partikeldurchmesser und die Glanzwerte sind in Tabelle 1 zusammengestellt.

Tabelle 1

| Beispiel | Versuchsbedingungen | | | | Produktcharakterisierung | |
|---|---|---|---|---|---|---|
| | N abs | * | Temp. °C | Verweilzeit h | mittl. Partikel- durchmesser in $\mu$ | Glanzwert |
| 3 | 1,5 N | 0,5 | 230 | 0,5 | 3,9 | 26,8 |
| 4 | 2,0 N | 1,0 | 230 | 0,5 | 3,9 | 30,3 |
| 5 | 3,0 N | 2,0 | 230 | 0,5 | 4,0 | 32,2 |
| 6 | 1,5 N | 0,5 | 290 | 0,5 | 4,3 | 32,7 |
| 7 | 2,0 N | 1,0 | 290 | 0,5 | 4,5 | 35,0 |
| 8 | 3,0 N | 3,0 | 290 | 0,5 | 4,8 | 38,5 |
| 9 | 1,5 N | 0,5 | 330 | 0,5 | 5,5 | 40,8 |
| 10 | 2,0 N | 1,0 | 330 | 0,5 | 5,7 | 42,4 |
| 11 | 3,0 N | 2,0 | 330 | 0,5 | 5,7 | 43,3 |
| 12 | 1,5 N | 0,5 | 330 | 1,5 | 6,2 | 44,9 |
| 13 | 1,5 N | 0,5 | 330 | 3,5 | 6,4 | 45,6 |

\* Erhöhung der Normalität der Lauge gegenüber der ersten Stufe

Wie aus der Tabelle zu ersehen ist, steigt der Partikeldurchmesser und damit auch der Glanzwert mit
(a) steigender Differenz der Natronlaugekonzentration gegenüber der ersten Stufe,
(b) steigender Temperatur in der zweiten Stufe und
(c) steigender Verweilzeit in der zweiten Stufe.

Beispiel 14

a) Stufe 1

In einem 7-m³-Rührautoklaven werden 4600 l einer wäßrigen $\alpha$-FeOOH-haltigen Suspension mit einem Feststoffgehalt von 30,7 g/l FeOOH eingetragen. Das in der Suspension enthaltene FeOOH hat eine spezifische Oberfläche (BET) von 115 m²/g. In die FeOOH-Suspension werden zusätzlich 139 kg $\gamma$-Al$_2$O$_3$ und 231,9 kg NaOH gegeben, entsprechend einer Alkalilaugekonzentration von 1,25 N.

Anschließend wird die Suspension innerhalb von 5,5 Stunden auf 245°C unter Rühren aufgeheizt, dann wird 0,5 Stunden lang bei dieser Temperatur gerührt.

In der Suspension befinden sich Hematitplättchen, aus deren Analyse sich die Zusammensetzung $Al_{0,17}Fe_{1,83}O_3$ errechnet. Cilasmessungen ergeben einen Wert für den mittleren Partikeldurchmesser von 8,9 $\mu$. Die gemessenen L\*-Werte betragen bei einem Meßwinkel von 25° : 56,0, bei einem Meßwinkel von 45° : 34,5. Daraus errechnet sich ein Glanzwert von 38,4.

b) Stufe 2

Durch Zupumpen von 50%iger NaOH zu der in Stufe 1 erhaltenen Suspension wird die NaOH-Konzentration auf 60 g/l erhöht. Die zugepumpte Natronlauge enthält 31.6 g/l $\gamma$-$Al_2O_3$.

Unter Rühren wird die 245°C heiße Suspension innerhalb von 10 Stunden gleichmäßig auf 100°C abgekühlt. Dann wird 1 cbm Wasser in den Kessel gepumpt und die Suspension wird ausgetragen. Das Produkt wird filtriert, zunächst mit 80°C warmer 1 N NaOH, dann mit Wasser gewaschen und bei 110°C getrocknet.

Die entstandenen Pigmentpartikel zeigten bei der rasterelektronenmikroskopischen Untersuchung glatte, ebene Oberflächen und sind frei von Stippen. Röntgenaufnahmen weisen Hematitlinien auf. Die chemische Untersuchung des Pigments ergibt die Zusammensetzung $Al_{0,17}Fe_{1,83}O_3$. Partikelgrößenmessungen zeigen einen Wert für den mittleren Partikeldurchmesser von 13,9 $\mu$. Die gemessenen L∗-Werte betragen bei einem Meßwinkel von 25° : 65,8, bei einem Meßwinkel von 45° : 31,9; daraus errechnet sich eine Glanzzahl von 51,5.

Beispiel 15

10 g (bezogen auf Trockensubstanz) des in Stufe 1 des Beispieles 1 erhaltenen nicht getrockneten Pigmentes werden zusammen mit 140 g 2 N NaOH-Lösung und 1 g Wasserglas (25,5 % $SiO_2$) in einem 300-l-Rührautoklaven innerhalb von 30 min. auf 330°C aufgeheizt, dann wird 30 min. lang bei 330°C gerührt und anschließend innerhalb von 15 min auf 100°C abgekühlt. Das Festprodukt wird filtriert, zunächst mit 80°C warmer 1 N NaOH und dann mit $H_2O$ gewaschen und bei 120°C getrocknet.

Das Pigment zeigt in rasterelektronenmikroskopischen Aufnahmen glatte Plättchenoberflächen. Der mittlere Partikeldurchmesser wird mit 4,1 $\mu$ gemessen. Die Analyse weist 2,7 % Al, 62,9 % Fe und 1 % Si auf. Die L\*-Werte bei Meßwinkeln von 25° und 45° betragen 65,2 bzw. 44,9, woraus sich ein Glanzwert von 31,1 errechnet.

Beispiel 16

10 g des in Stufe 1 des Beispieles 1 erhaltenen Pigmentes werden mit 140 g 1,5 N Natronlauge und 1 g Natriumchromat ($Na_2CrO_4 \cdot 4H_2O$) unter Rühren 30 min. lang in einem 300 ml Autoklaven auf 330°C aufgeheizt. Danach wird bei dieser Temperatur 30 min. lang gerührt und innerhalb von 15 min. auf 100°C abgekühlt. Das Festprodukt wird abfiltriert, zunächst mit 80°C warmer 1 N NaOH und dann mit $H_2O$ gewaschen und getrocknet.

Das Pigment hat bräunlich gelben Farbton und glänzt. Die Analyse ergibt 0,19 % Cr, 0,9 % Al, 68,0 % Fe. Rasterelektronenmikroskopische Aufnahmen zeigen, daß das Pigment plättchenförmigen Habitus aufweist und daß die Einzelpartikel glatte ebene Oberflächen haben. Cilasgranulometrische Messungen ergeben einen mittleren Partikeldurchmesser von 4,6 $\mu$. Der Glanzwert wird mit 39,0 ermittelt. Die Farbwerte betragen $C_{ab}$ = 24,0 und H° = 36,7 bei einem Meßwinkel von 45°.

Beispiele 17 bis 25

In Analogie zu Beispiel 16 werden die Beispiele 17 bis 25 durchgeführt mit dem Unterschied, daß anstelle des Chromats andere Zusätze verwendet werden. Die Ergebnisse sind in Tabelle 2 zusammengestellt. Ausgangsprodukte war in allen Fällen das gemäß Stufe 1 des Beispiels 1 erhaltene Pigment.

Tabelle 2

| Bsp.-Nr. | Zusatz jeweils 1 g | mittlerer Partikel- durchmesser | Glanzwert | Farbwerte | | | | im Festkörper analyt. gefunden |
|---|---|---|---|---|---|---|---|---|
| | | | | L*25 | L*45 | C*ab | H° | |
| 17 | $Na_2MoO_4$ x 2 $H_2O$ | 5,4 | 38,6 | 59,2 | 36,4 | 22,4 | 33,2 | Mo: 0,03 % |
| 18 | $Na_2WO_4$ x 2 $H_2O$ | 5,5 | 40,5 | 58,0 | 34,5 | 18,9 | 33,7 | W: 0,12 % |
| 19 | $Na_2HPO_4$ x 12 $H_2O$ | 5,6 | 37,1 | 60,8 | 38,2 | 28,0 | 37,8 | P: 0,1 % |
| 20 | $KMnO_4$ | 4,2 | 30,8 | 64,0 | 44,3 | 21,7 | 46,4 | Mn: 3,0 % |
| 21 | $TiOSO_4$ | 4,0 | 28,3 | 65,7 | 47,1 | 27,2 | 46,0 | Ti: 2,3 % |
| 22 | $ZrSO_4$ x 4 $H_2O$ | 5,1 | 34,3 | 58,0 | 38,1 | 22,7 | 33,6 | Zr: 0,01 % |
| 23 | $As_2O_3$ | 5,1 | 37,9 | 58,1 | 36,1 | 19,3 | 32,3 | As: 0,10 % |
| 24 | $Sb_2O_3$ | 4,0 | 29,2 | 65,3 | 46,2 | 26,5 | 45,8 | Sb: 6,8 % |
| 25 | $Na_2B_4O_7$ x 10 $H_2O$ | 5,8 | 38,7 | 58,1 | 35,6 | 21,0 | 33,6 | B: 0,03 % |

EP 0 417 567 B1

**Patentansprüche**

1. Verfahren zur Herstellung von plättchenförmigen Eisenoxiden durch hydrothermale Behandlung von Eisen(III)hydroxid bzw. -oxidhydraten enthaltenden wäßrigen Suspensionen in Gegenwart von Alkalihydroxiden, sowie von Aluminium- und/oder Siliciumverbindungen, dadurch gekennzeichnet, daß man die hydrothermale Behandlung in zwei Stufen durchführt mit der Maßgabe, daß man in der ersten Stufe eine Normalität der Alkalilauge von 0,2 bis 2 N einhält und in der zweiten Stufe die Normalität um 0,2 bis 2,5 N erhöht.

2. Verfahren nach Anspruch 1, dadurch gekennzeichnet, daß man in der ersten Stufe Temperaturen von 170 bis 360°C und in der zweiten Stufe von 150 bis 360°C einhält.

3. Verfahren nach den Ansprüchen 1 bis 2, dadurch gekennzeichnet, daß man die hydrothermale Behandlung in der zweiten Stufe in Gegenwart von in Alkalilaugen löslichen Verbindungen der Elemente Silicium, Aluminium, Arsen, Antimon, Bor, Zirkon, Phosphor, Titan, Chrom, Mangan, Molybdän und Wolfram durchführt.

**Claims**

1. A process for producing iron oxides in the form of platelets by hydrothermal treatment of aqueous suspensions containing iron(III) hydroxide or oxide hydrates in the presence of alkali metal hydroxides and of aluminum and/or silicon compounds, which comprises carrying out the hydrothermal treatment in two stages, with the proviso that the normality of the alkali is from 0.2 to 2 N in the first stage and is increased by from 0.2 to 2.5 N in the second stage.

2. A process as claimed in claim 1, wherein the temperature in the first stage is from 170 to 360°C and in the second stage is from 150 to 360°C.

3. A process as claimed in claim 1, wherein the hydrothermal treatment in the second stage is carried out in the presence of compounds, which are soluble in alkalis, of the elements silicon, aluminum, arsenic, antimony, boron, zirconium, phosphorus, titanium, chromium, manganese, molybdenum and tungsten.

**Revendications**

1. Procédé de préparation d'oxydes de fer en paillettes par traitement hydrothermal de suspensions aqueuses contenant de l'hydroxyde ou de l'oxyhydrate de fer III, en présence d'hydroxydes alcalins ainsi que de composés de l'aluminium et/ou du silicium, caractérisé en ce qu'on conduit le traitement hydrothermal en deux étapes, étant spécifié que, dans la première étape, on maintient une normalité de la lessive alcaline de 0,2 à 2 N et que, dans la seconde étape, on élève la normalité de 0,2 à 2,5 N.

2. Procédé selon la revendication 1, caractérisé en ce qu'on maintient, dans la première étape, des températures de 170 à 360°C et, dans la seconde étape, des températures de 150 à 360°C.

3. Procédé selon la revendication 1 ou 2, caractérisé en ce qu'on conduit le traitement hydrothermal, dans la seconde étape, en présence de composés, solubles dans les lessives alcalines, des éléments silicium, aluminium, arsenic, antimoine, bore, zirconium, phosphore, titane, chrome, manganèse, molybdène et tungstène.